# EUROPÄISCHE PATENTSCHRIFT

(11) **EP 3 892 574 B1**
(45) Veröffentlichungstag und Bekanntmachung des Hinweises auf die Patenterteilung: **06.09.2023**
(21) Anmeldenummer: 20168809.0
(22) Anmeldetag: 08.04.2020
(51) Int. Cl.: B65G 69/18

(54) **ABDECKHAUBE UND VERFAHREN ZUM BEFÜLLEN**
COVER HOOD AND METHOD FOR FILLING
CAPOT ET PROCÉDÉ DE REMPLISSAGE

(43) Veröffentlichungstag der Anmeldung: 13.10.2021
(73) Patentinhaber: BAUER Resources GmbH, 86529 Schrobenhausen (DE)
(72) Erfinder: Schmid, Gregor, 86161 Augsburg (DE); Haidacher, Dominic, 86529 Schrobenhausen (DE)
(74) Vertreter: Wunderlich & Heim Patentanwälte Partnerschaftsgesellschaft mbB

(56) Entgegenhaltungen:
- CN-A- 105 819 243
- DE-U1- 29 816 260
- DE-U1-202015 005 680
- GB-A- 832 117
- US-A- 4 571 250
- US-A1- 2018 177 359
- US-A1- 2019 315 583
- US-B1- 6 581 778

## Beschreibung

Die Erfindung betrifft eine Abdeckhaube zum Aufsetzen auf einen an seiner Oberseite offenen Aufnahmebehälter, mit einem haubenartigen Gehäuse, welches eine Beladeöffnung aufweist, gemäß Anspruch 1.

Die Erfindung betrifft weiter ein Verfahren zum Befüllen eines an seiner Oberseite offenen Aufnahmebehälters, auf welchen eine Abdeckhaube aufgesetzt ist, gemäß Anspruch 13.

Abdeckhauben mit Beladeöffnung sind von einer Vielzahl von Abfallbehältern grundsätzlich bekannt.

Bei der Sanierung von Böden ist es häufig erforderlich, eine große Menge an Boden abzutragen und zu einer Deponie oder zu einer Anlage zur Dekontaminierung zu transportieren. Der Transport erfolgt dabei üblicherweise mit Containern oder sogenannten Mulden, die bei Bedarf zum Transport mit Deckeln oder Planen abgedeckt werden können. Die Container oder Mulden werden üblicherweise von oben mit einem Radlader mit dem kontaminierten Boden befüllt Bei diesem Befüll- oder Schüttvorgang besteht die Gefahr, dass leicht flüchtige Schadstoffe in die Umgebungsluft ausgetragen werden.

Es ist bekannt, zur Vermeidung von Schadstoffemissionen den Schüttvorgang in einer Halle oder einem eigens aufgestellten Zelt mit einer Luftabsaugung durchzuführen. Dies ist insgesamt sehr platz- und kostenaufwendig.

Aus der DE 4 000 487 A1 ist eine Vorrichtung zur Entfernung von Schadstoffen aus Abluft aus einem Container bekannt. Diese Anordnung setzt einen geschlossenen Container voraus.

Aus der WO 02/20383 A1 geht eine Einrichtung zum Einfüllen eines Schüttgutes in einen Behälter hervor, wobei neben einem Einfüllrohr unmittelbar mehrere Luftansaugrohre vorgesehen werden. Durch diese Luftansaugrohre kann staubhaltige Luft abgesaugt werden.

Eine weitere Beladevorrichtung ist aus der CN105819243A1 bekannt. Diese zeigt eine im Querschnitt U-förmige stationäre Beladevorrichtung die hängend über einen an seiner Oberseite offenen Aufnahmebehälter positionierbar ist. Die Beladevorrichtung ist in ihrer vertikalen Position gegenüber dem Aufnahmebehälter veränderbar, um die Abwurfhöhe für die zu verladenden Zementsäcke anzupassen. Dazu kann die Beladevorrichtung an ihren Stirnseiten Abdeckvorhänge tragen, die einen Raum über dem Aufnahmebehälter erzeugen, der mittels einer Absaugvorrichtung gezielt abgesaugt werden kann.

Die US4571250A beschreibt einen Aschebehälter, dessen oberer Teil mit einer kuppelförmigen Haube versehen ist. Die Haube weist einen Absaugstutzen zum Anschließen einer Luftabsaugeinrichtung und eine Beladeöffnung auf, die von einer Tür abgedeckt ist. Die US4571250A beschreibt eine Abdeckhaube gemäß dem Oberbegriff des Anspruchs 1.

Der Erfindung liegt die **Aufgabe** zugrunde, eine Abdeckhaube zum Aufsetzen auf einen an seiner Oberseite offenen Aufnahmebehälter und ein Verfahren zum Befüllen des Aufnahmebehälters vorzusehen, mit welchen weiterhin ein einfaches Befüllen bei gleichzeitiger Reduktion einer Schadstoffemission ermöglicht wird.

Die Aufgabe wird nach der Erfindung durch eine Abdeckhaube mit den Merkmalen des Anspruchs 1 beziehungsweise durch ein Verfahren mit den Merkmalen des Anspruchs 13 gelöst. Bevorzugte Ausführungsformen der Erfindung sind in den abhängigen Ansprüchen angegeben.

Die erfindungsgemäße Abdeckhaube ist dadurch gekennzeichnet, dass die Beladeöffnung von einem Vorhang abgedeckt ist, welcher aus flexiblen Abdeckstreifen gebildet ist, und dass an dem Gehäuse mindestens ein Absaugstutzen angeordnet ist, an welchen zum Erzeugen eines Unterdrucks unter der Abdeckhaube eine Luftabsaugeinrichtung anschließbar ist.

Ein Grundgedanke der Erfindung liegt darin, an einer Beladeöffnung einer Abdeckhaube einen flexiblen Vorhang aus Abdeckstreifen vorzusehen. Vorzugsweise schließen dabei die Abdeckstreifen die Beladeöffnung nicht vollständig luftdicht ab, sodass sich unter der Abdeckhaube definierte Strömungsverhältnisse einstellen können. Die Abdeckstreifen sind dabei so ausgelegt, dass beim Einfüllen beispielsweise von Schüttgut diese aus ihrer Dichtposition gedrückt werden können, während die Dichtstreifen nach Aufnahme des Schüttgutes durch ihre Ausgestaltung wieder zurück in ihre Abdichtposition bewegt werden.

Somit ist ein einfaches Befüllen auch von großen Mengen von Schüttgut möglich, wobei eine Beladeöffnung nur durch das Schüttgut selbst geöffnet wird, so dass keine oder kaum schadstoffhaltige Luft aus dem durch die Abdeckhaube geschlossenen Behälter nach außen dringen kann.

Ein weiterer Aspekt der Erfindung liegt darin, dass die Abdeckhaube mit mindestens einem Absaugstutzen versehen ist, über welchen ein Unterdruck unter der Abdeckhaube und damit in dem umschlossenen Raum des Aufnahmebehälters erzeugt werden kann. Durch den Absaugstutzen kann so schadstoffhaltige Luft gezielt aus dem Aufnahmebehälter abgesaugt und einer Reinigung unterzogen werden. Gleichzeitig sorgt die Einstellung eines Unterdruckes in dem Raum, welcher von dem Aufnahmebehälter und der Abdeckhaube umschlossen wird, dafür, dass auch beim Einfüllen allenfalls Luft von außen nach innen dringen kann, jedoch keine schadstoffhaltige Luft entgegen der Druckdifferenz nach außen dringt.

Die Festigkeit und Elastizität der Abdeckstreifen des Vorhanges sind dabei so ausgewählt und eingestellt, dass diese bei dem eingestellten Unterdruck ihre Abdichtposition an der Beladeöffnung beibehalten. Die Abdeckstreifen können sich teilweise überlappen oder dicht nebeneinander liegen.

Eine bevorzugte Ausführungsform der Erfindung besteht darin, dass das Gehäuse dachartig ausgebildet ist und sich nach oben hin verjüngt. Eine derartige dachartige Anordnung erleichtert ein Sammeln und Absaugen leicht flüchtiger, schadstoffhaltiger Bestandteile der Luft unter der Abdeckhaube. Weiterhin wird durch die dachartige Ausgestaltung mindestens eine schräggestellte Wand der Abdeckhaube gebildet, in welcher vorzugsweise die Beladeöffnung ausgebildet ist. Die Schrägstellung dieser Wand mit der Beladeöffnung erleichtert den Befüllvorgang.

Grundsätzlich kann die Beladeöffnung in jeder beliebigen Form ausgebildet sein. Vorteilhaft ist es nach einer Weiterbildung der Erfindung, dass die Beladeöffnung rechteckig zum Einfüllen von Schüttgut mit einer Radladerschaufel und/oder Baggerschaufel oder ähnliches ausgebildet ist. Die Radladerschaufel und/oder Baggerschaufel kann an einem Bagger oder einem Radlader oder einer sonstigen Arbeitsmaschine angeordnet sein.

Eine weitere zweckmäßige Ausgestaltung der Erfindung besteht darin, dass die Beladeöffnung an einer Vorderseite des Gehäuses ausgebildet ist und dass der mindestens eine Absaugstutzen auf einer Rückseite des Gehäuses angeordnet ist, welche der Vorderseite gegenüberliegt. Bei dieser Anordnung kann insbesondere beim

Einfüllen von Schüttgut durch den Absaugstutzen von der gegenüberliegenden Wand staubhaltige und/oder schadstoffhaltige Luft zuverlässig abgesaugt werden.

Eine besonders gute Absaugung kann weiterhin dadurch erzielt werden, dass mehrere Absaugstutzen vorgesehen sind. Diese können gemeinsam an einer Wand oder an unterschiedlichen Wänden der Abdeckhaube angeordnet sein.

Grundsätzlich können die Abdeckstreifen aus jedem geeigneten Material gebildet sein, um eine vollständige oder im Wesentlichen abdichtende Sperrfunktion zu bilden. Besonders vorteilhaft ist es nach einer Ausführungsvariante der Erfindung, dass die flexiblen Abdeckstreifen mit einem Kunststoffmaterial oder einem Gummimaterial gebildet sind, welches durch Textil- und/oder Metalleinlagen verstärkt ist. Hierdurch kann eine gewünschte Elastizität bei einer notwendigen Festigkeit und der Rückstellkraft der Abdichtstreifen erzielt werden, wobei gleichzeitig eine gute Abdichtfunktion gewährleistet ist.

Weiterhin ist es vorteilhaft, dass an einer Unterseite des Gehäuses ein Auflagebereich zum Auflegen auf den Aufnahmebehälter ausgebildet ist und dass mindestens eine Befestigungseinrichtung zum Befestigen des Gehäuses an dem Aufnahmebehälter vorgesehen ist. Vorzugsweise ist der Auflagebereich entsprechend der Kontur des Randes an der Oberseite des Aufnahmebehälters ausgebildet. Gegebenenfalls kann an der Unterseite des Gehäuses ein Dichtelement, etwa eine Gummibeschichtung oder ein schlauchartiges Dichtelement, vorgesehen sein, um eine Fuge zwischen dem Aufnahmebehälter und der Abdeckhaube zuverlässig abzudichten. Der Auflagebereich kann vorzugsweise als ein verbreiteter Ring ausgebildet sein, so dass die Abdeckhaube für verschiedene Größen und Arten von Aufnahmebehältern einsetzbar ist. Das Gehäuse ist wie der Aufnahmebehälter vorzugsweise aus Metall gefertigt. Die Verwendung von Kunststoff- oder Holzwerkstoffen ist aber auch grundsätzlich möglich.

Der insbesondere ringförmigen Aufnahmebereich kann dabei lösbar an dem Gehäuse angebracht sein, so dass es als eine Art Adapter zu dem Aufnahmebehälter dient und gegebenenfalls leicht durch einen anderen passenden Auflagebereich ausgetauscht werden kann.

Als Befestigungseinrichtung können vorstehende Stifte und hierzu passend angeordnete Aufnahmebohrungen vorgesehen sein, so dass eine einfache Steckverbindung gebildet werden kann. Alternativ oder zusätzlich können weitere Befestigungseinrichtungen angebracht werden.

Besonders vorteilhaft ist es dabei, dass die Befestigungseinrichtung Schraub-, Klemm- und/oder Spannelemente aufweist. In einer bevorzugten Ausführung sind diese passend zu den normierten Befestigungselementen von ISO-Containern ausgeführt. Neben einer rein formschlüssigen Verbindung kann so auch eine kraftschlüssige Verbindung geschaffen werden, wodurch die Abdeckhaube noch zuverlässiger an dem Aufnahmebehälter befestigt werden kann. An einer Oberseite des Gehäuses können ein oder mehrere Haken oder Ösen vorgesehen sein, so dass die Abdeckhabe durch ein Hubseil leicht aufgesetzt oder umgesetzt werden kann.

Die Erfindung umfasst weiterhin eine Behälteranordnung mit einem Aufnahmebehälter, insbesondere zum Aufnehmen von Schüttgut mit einer oben offenen Oberseite, wobei auf der Oberseite die zuvor beschriebene erfindungsgemäße Abdeckhaube aufgesetzt ist. Mit der Behälteranordnung können die zuvor beschriebenen Vorteile erzielt werden. Insbesondere ist die Behälteranordnung zum Aufnehmen von mehreren Kubikmetern an Schüttgut, insbesondere von kontaminierter Erde, ausgebildet. Die Behälteranordnung kann jedoch auch zur Aufnahme anderer Güter, selbst ohne schadstoffhaltige Bestandteile, eingesetzt werden, etwa zur Vermeidung einer Stauberzeugung beim Verladen von Schüttgut.

Grundsätzlich kann der Aufnahmebehälter beliebig ausgebildet sein. Besonders bevorzugt ist es, dass der Aufnahmebehälter als ein Container oder als eine Mulde ausgebildet ist. Derartige Aufnahmebehälter sind zum Transport von Schüttgut hinlänglich bekannt.

Der Aufnahmebehälter kann sich dabei bereits an einem Fahrzeug befinden oder von einem solchen aufgenommen werden.

Weiterhin ist es bevorzugt, dass mindestens eine Luftabsaugeinrichtung direkt oder über eine Absaugleitung an dem mindestens einen Absaugstutzen angeschlossen ist. Die Luftabsaugeinrichtung kann eine Unterdruckpumpe oder ein Gebläse aufweisen, welches eine gewünschte Druckdifferenz einstellt. Abhängig von dem zu verarbeitenden Material kann die Druckdifferenz, welche gegenüber der Umgebungsatmosphäre eingestellt wird, bis zu 2 Pa oder darüber hinaus betragen.

Ein besonders guter Umweltschutz wird nach einer Weiterbildung der Erfindung dadurch erzielt, dass die Luftabsaugeinrichtung mit einer Filtereinrichtung zum Abscheiden von Schadstoffen versehen ist. Die Filtereinrichtung kann insbesondere ein geeigneter Luftfilter mit einem durchströmbaren Filtermedium sein, an welchem sich Partikel bis zu einer vorgesehenen Mindestgröße anlagern und so aus einem Luftstrom abgetrennt werden.

Das erfindungsgemäße Verfahren ist dadurch gekennzeichnet,
dass eine Baggerschaufel und/oder Radladerschaufel oder ähnliches mit Schüttgut in die Beladeöffnung bewegt wird, wobei die flexiblen Abdeckstreifen des Vorhangs aus ihrer Abdichtposition in eine Freigabeposition gedrückt werden, und
dass nach dem Entleeren die Baggerschaufel und/oder Radladerschaufel oder ähnliches rückgezogen wird, wobei sich die Abdeckstreifen wieder in Ihre Abdichtposition rückstellen.

Das Verfahren wird mit der zuvor beschriebenen Abdeckhaube ausgeführt, wobei sich die dargelegten Vorteile ergeben.

Die Erfindung wird nachfolgend anhand eines bevorzugten Ausführungsbeispiels weiter beschrieben, welches schematisch ihn den beigefügten Zeichnungen dargestellt ist. In den Zeichnungen zeigen:
- Fig. 1: eine perspektivische Ansicht einer erfindungsgemäßen Behälteranordnung mit einer Abdeckhaube;
- Fig. 2: eine Ansicht der Behälteranordnung von Fig. 1 von hinten;
- Fig. 3: eine Seitenansicht der Behälteranordnung der Figuren 1 und 2;
- Fig. 4: eine schematische Seitenansicht der Behälteranordnung beim Befüllen und
- Fig. 5: eine perspektivische Ansicht der Behälteranordnung von Fig. 4 beim Befüllen.

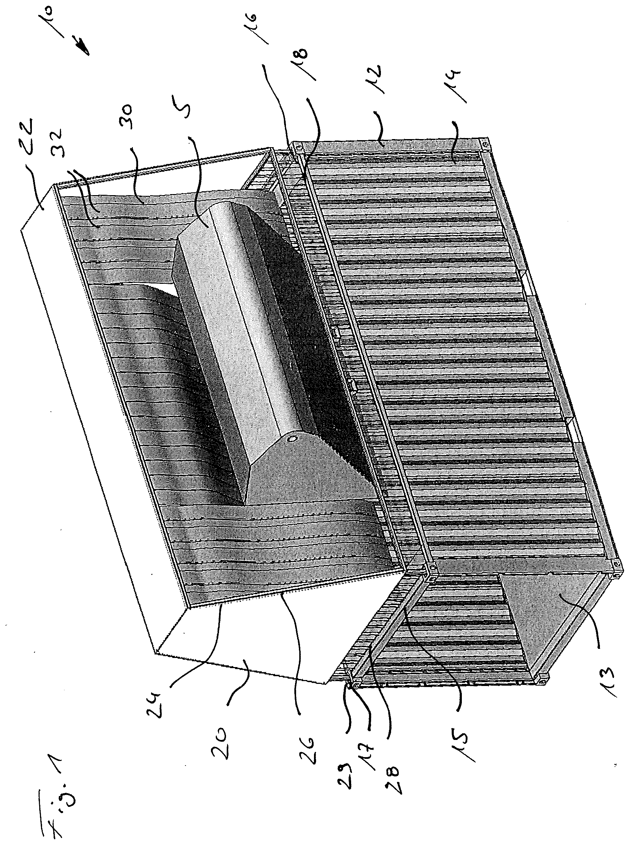

Gemäß Fig. 1 weist eine erfindungsgemäße Behälteranordnung 10 einen Aufnahmebehälter 12 auf, auf welchen eine erfindungsgemäße Abdeckhaube 20 aufgesetzt ist. In dem dargestellten Ausführungsbeispiel ist der Aufnahmebehälter 12 ein Standard-Container mit Seitenwänden 14 und einer Oberseite 16, welche mit einer Öffnung 18 versehen ist, so dass insgesamt eine offene Oberseite 16 gebildet ist. Bei dem Aufnahmebehälter 12 kann weiterhin eine zu öffnende und verschließbare Vorderseite 13 vorgesehen sein. Beim Befüllen ist die Vorderseite 13 grundsätzlich verschlossen. Diese kann jedoch für ein späteres Entladen geöffnet werden.

Auf die offene Oberseite 16 des Aufnahmebehälters 12 ist die Abdeckhaube 20 mit einem Gehäuse 22 aus einem Blechmaterial aufgesetzt. Das dachartige Gehäuse 22 weist Wände 24 auf, von denen mindestens eine Wand 24 schräggestellt ist. Das prismenförmige Gehäuse 22 verjüngt sich zu seiner Oberseite hin.

Zum Aufsetzen auf den Aufnahmebehälter 12 weist das Gehäuse 22 an seiner Unterseite einen ringförmigen Auflagebereich 28 auf. Der Auflagebereich 28 ist passend zu einem Rand 15 um die offene Oberseite 16 des Aufnahmebehälters 12 ausgebildet.

Entlang des Auflagebereichs 28 können Befestigungseinrichtungen 29 angeordnet sein. Im dargestellten Ausführungsbeispiel sind als Befestigungseinrichtung 29 am Auflagebereich 28 nach unten vorstehende Stifte angeordnet, welche in Ausnehmungen 17 an Eckbereichen des Randes 15 des Aufnahmebehälters 12 eingreifen. Auf diese Weise ist die Absaughaube 20 formschlüssig mit dem Aufnahmebehälter 12 verbunden.

Zum Aufnehmen von Schüttgut weist das Gehäuse 22 an seiner Vorderseite eine rechteckige Beladeöffnung 26 auf, welche von einem Vorhang 30 aus nebeneinander liegenden Abdeckstreifen 32 abgeschlossen ist. Die Abdeckstreifen 32 sind aus einem flexiblen Material gebildet, so dass diese etwa bei Kontakt mit einer schematisch angedeuteten Baggerschaufel oder Radladerschaufel 5 die Beladeöffnung 26 freigeben, so dass Schüttgut aus der Baggerschaufel oder Radladerschaufel 5 über die offene Oberseite 16 in den Aufnahmebehälter 12 gelangen kann.

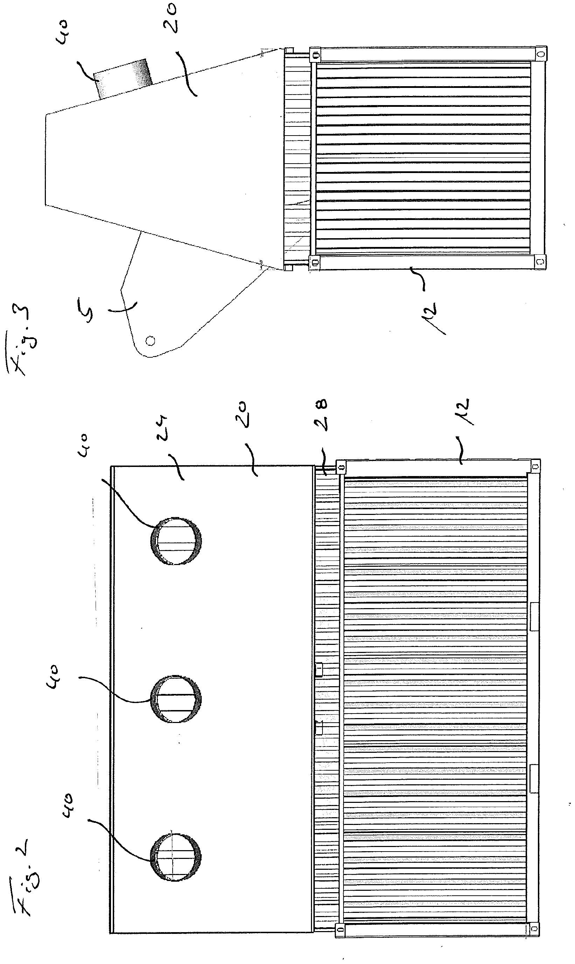

Wie anschaulich aus den Figuren 2 und 3 hervorgeht, weist das Gehäuse 22 der Abdeckhaube 20 an seiner Rückseite, welche der Vorderseite mit der Beladeöffnung 26 gegenüberliegt, mindestens einen Absaugstutzen 40 auf. Im dargestellten Ausführungsbeispiel sind drei nebeneinander liegende Absaugstutzen 40 vorgesehen. An den Absaugstutzen 40 können über eine Absaugleitung eine oder mehrere Luftabsaugeinrichtungen angeschlossen werden, mit welchen Luft aus der Abdeckhaube 20 abgesaugt werden kann. Gleichzeitig wird dabei unter der Abdeckhaube 20 ein Unterdruck eingestellt, durch welchen weitgehend verhindert wird, dass bei einem Beladevorgang durch die freigegebene Beladeöffnung 26 Luft aus dieser nach außen in größeren Mengen austritt. Auf diese Weise kann die erfindungsgemäße Behälteranordnung 10 in besonders umweltschonender Weise für ein Aufnehmen und Beladen von Schüttgut mit leicht flüchtigen Schadstoffen eingesetzt werden.

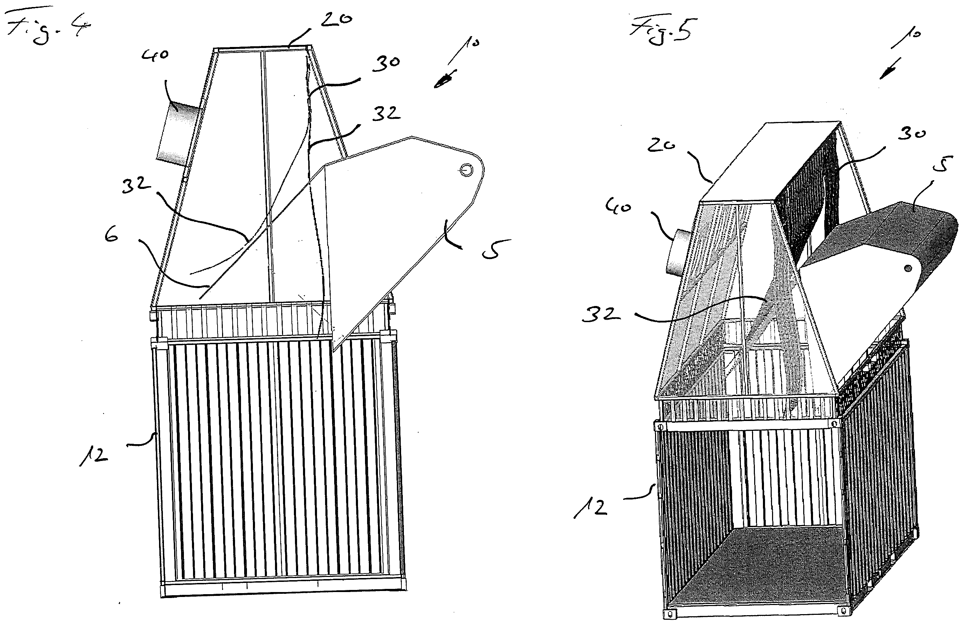

Der Beladevorgang über eine Baggerschaufel oder Radladerschaufel 5, deren offene Seite mit einer schwenkbaren Klappe 6 abgedeckt sein kann, ist weiter schematisch in den Figuren 4 und 5 dargestellt. Über ein nicht dargestelltes Arbeitsgerät wird die Baggerschaufel oder Radladerschaufel 5 in einfacher Weise in die Beladeöffnung 26 der Abdeckhaube 20 eingefahren, wobei die jeweils angrenzenden Abdeckstreifen 32 nach hinten weggedrückt werden. Durch einen Kippvorgang der Baggerschaufel oder Radladerschaufel 5 kann das Schüttgut aus der Baggerschaufel oder Radladerschaufel 5 unter gleichzeitigem Aufdrücken der Klappe 6 durch die Behälteröffnung 26 in den Aufnahmebehälter 12 rutschen. Nach Beendigung des Schüttvorganges wird die Baggerschaufel oder Radladerschaufel 5 wieder aus der Beladeöffnung 26 herausgezogen, wobei sich die Abdeckstreifen 32 aufgrund ihrer Elastizität wieder zurück in ihre Abdichtposition zurückbewegen, in welcher die Beladeöffnung 26 der Abdeckhaube 20 verschlossen ist.

## Patentansprüche

1. Abdeckhaube zum Aufsetzen auf einen an seiner Oberseite (16) offenen Aufnahmebehälter (12), mit einem haubenartigen Gehäuse (22), welches eine Beladeöffnung (26) aufweist,
wobei an dem Gehäuse (22) mindestens ein Absaugstutzen (40) angeordnet ist, an welchen zum Erzeugen eines Unterdrucks unter der Abdeckhaube (20) eine Luftabsaugeinrichtung anschließbar ist, **dadurch gekennzeichnet,**
**dass** die Beladeöffnung (26) von einem Vorhang (30) abgedeckt ist, welcher aus flexiblen Abdeckstreifen (32) gebildet ist.

2. Abdeckhaube nach Anspruch 1,
**dadurch gekennzeichnet,**
**dass** das Gehäuse (22) dachartig ausgebildet ist und sich nach oben hin verjüngt.

3. Abdeckhaube nach Anspruch 1 oder 2,
**dadurch gekennzeichnet,**
**dass** die Beladeöffnung (26) rechteckig zum Einfüllen von Schüttgut mit einer Baggerschaufel und/oder Radladerschaufel oder ähnliches (5) ausgebildet ist.

4. Abdeckhaube nach einem der Ansprüche 1 bis 3,
**dadurch gekennzeichnet,**
**dass** die Beladeöffnung (26) an einer Vorderseite des Gehäuses (22) ausgebildet ist und
**dass** der mindestens eine Absaugstutzen (40) auf einer Rückseite des Gehäuses (22) angeordnet ist, welcher der Vorderseite gegenüberliegt.

5. Abdeckhaube nach einem der Ansprüche 1 bis 4,
**dadurch gekennzeichnet,**
**dass** mehrere Absaugstutzen (40) vorgesehen sind.

6. Abdeckhaube nach einem der Ansprüche 1 bis 5,
**dadurch gekennzeichnet,**
**dass** die flexiblen Abdeckstreifen (32) mit einem Kunststoffmaterial oder einem Gummimaterial gebildet sind, welches durch Textil- und/oder Metalleinlagen verstärkt sein kann.

7. Abdeckhaube nach einem der Ansprüche 1 bis 6,
**dadurch gekennzeichnet,**
**dass** an einer Unterseite des Gehäuses (22) ein Auflagebereich (28) zum Auflegen auf den Aufnahmebehälter (12) ausgebildet ist und
**dass** mindestens eine Befestigungseinrichtung (29) zum Befestigen des Gehäuses (22) an dem Aufnahmebehälter (12) vorgesehen ist.

8. Abdeckhaube nach Anspruch 7,
**dadurch gekennzeichnet,**
**dass** die Befestigungseinrichtung (29) Schraub-, Klemm- und/oder Spannelemente aufweist.

9. Behälteranordnung mit einem Aufnahmebehälter (12), insbesondere zum Aufnehmen von Schüttgut, mit einer oben offenen Oberseite (16),
**dadurch gekennzeichnet,**
**dass** auf der Oberseite (16) eine Abdeckhaube (20) nach einem der Ansprüche 1 bis 8 aufgesetzt ist.

10. Behälteranordnung nach Anspruch 9,
**dadurch gekennzeichnet,**
**dass** der Aufnahmebehälter (12) als ein Container oder eine Mulde ausgebildet ist.

11. Behälteranordnung nach Anspruch 9 oder 10,
**dadurch gekennzeichnet,**
**dass** mindestens eine Luftabsaugeinrichtung direkt oder über eine Absaugleitung an dem mindestens einen Absaugstutzen (40) angeschlossen ist.

12. Behälteranordnung nach Anspruch 11,
**dadurch gekennzeichnet,**
**dass** die Luftabsaugeinrichtung mit einer Filtereinrichtung zum Abscheiden von Schadstoffen versehen ist.

13. Verfahren zum Befüllen eines an seiner Oberseite (16) offenen Aufnahmebehälters (12), auf welchen eine Abdeckhaube (20) nach einem der Ansprüche 1 bis 8 aufgesetzt ist,
**dadurch gekennzeichnet,**
**dass** eine Baggerschaufel und/oder Radladerschaufel oder ähnliches (5) mit Schüttgut in die Beladeöffnung (26) bewegt wird, wobei die flexiblen Abdeckstreifen (32) des Vorhangs (30) aus ihrer Abdichtposition in eine Freigabeposition gedrückt werden, und
**dass** nach dem Entleeren die Baggerschaufel und/oder Radladerschaufel oder ähnliches (5) rückgezogen wird, wobei sich die Abdeckstreifen (32) wieder in Ihre Abdichtposition rückstellen.

## Claims

1. Cover hood to be placed on a receiving container (12) open at its upper side (16), comprising a hood-like housing (22) which has a loading opening (26), wherein at least one suction port (40) is arranged on the housing (22), to which an air suction device is connectable in order to generate a negative pressure under the cover hood (20),
**characterised in that**
the loading opening (26) is covered by a curtain (30) which is formed from flexible cover strips (32).

2. Cover hood according to claim 1,
**characterised in that**
the housing (22) is formed to be roof-like and tapers upwards.

3. Cover hood according to claim 1 or 2,
**characterised in that**
the loading opening (26) is formed rectangular for filling-in bulk material with an excavator bucket and/or wheel loader bucket or similar (5).

4. Cover hood according to any one of claims 1 to 3,
**characterised in that**
the loading opening (26) is formed at a front side of the housing (22), and
**in that** the at least one suction port (40) is arranged on a rear side of the housing (22), which is opposite to the front side.

5. Cover hood according to any one of claims 1 to 4,
**characterised in that**
a plurality of suction ports (40) is provided.

6. Cover hood according to any one of claims 1 to 5,
**characterised in that**
the flexible cover strips (32) are formed with a plastic material or a rubber material, which can be reinforced by textile and/or metal inserts.

7. Cover hood according to any one of claims 1 to 6,
**characterised in that**
a support region (28) to be placed on the receiving container (12) is formed on an underside of the housing (22), and
**in that** at least one fastening device (29) is provided for fastening the housing (22) to the receiving container (12).

8. Cover hood according to claim 7,
**characterised in that**
the fastening device (29) comprises screwing, clamping and/or tensioning elements.

9. Container arrangement comprising a receiving container (12), in particular for receiving bulk material, comprising an upper side (16) open at the top,
**characterised in that**
a cover hood (20) according to any one of claims 1 to 8 is placed on the upper side (16).

10. Container arrangement according to claim 9,
**characterised in that**
the receiving container (12) is formed as a container or a trough.

11. Container arrangement according to claim 9 or 10,
**characterised in that**
at least one air suction device is connected directly or via a suction line to the at least one suction port (40).

12. Container arrangement according to claim 11,
**characterised in that**
the air suction device is provided with a filter device for separating pollutants.

13. Method for filling a receiving container (12) which is open at its upper side (16) and on which a cover hood (20) according to any one of claims 1 to 8 is placed, **characterised in that**
an excavator bucket and/or wheel loader bucket or the like (5) with bulk material is moved into the loading opening (26), wherein the flexible cover strips (32) of the curtain (30) are pressed from their sealing position into a release position, and
**in that** after emptying, the excavator bucket and/or wheel loader bucket or the like (5) is retracted, wherein the cover strips (32) return to their sealing position again.

## Revendications

1. Capot de protection à poser sur un récipient de réception (12) ouvert sur sa partie supérieure (16), comprenant un boîtier en forme de capot (22) doté d'une ouverture de chargement (26), dans lequel, sur le boîtier (22), est disposé au moins un raccord d'aspiration (40), auquel un dispositif d'aspiration d'air peut être raccordé pour créer une dépression sous le capot de protection (20), **caractérisé en ce que** l'ouverture de chargement (26) est recouverte par un rideau (30) constitué de bandes de recouvrement flexibles (32).

2. Capot de protection selon la revendication 1,
**caractérisé en ce que**
le boîtier (22) est en forme de toit et se rétrécit vers le haut.

3. Capot de protection selon la revendication 1 ou 2,
**caractérisé en ce que**
l'ouverture de chargement (26) est rectangulaire pour permettre le remplissage de matériau en vrac à l'aide d'une pelle excavatrice et/ou d'une pelle chargeuse ou similaire (5).

4. Capot de protection selon l'une des revendications 1 à 3,
**caractérisé en ce que**
l'ouverture de chargement (26) est située sur une face avant du boîtier (22) et
l'au moins un raccord d'aspiration (40) est disposé sur une face arrière du boîtier (22), en regard de la face avant.

5. Capot de protection selon l'une des revendications 1 à 4,
**caractérisé en ce que**
plusieurs raccords d'aspiration (40) sont prévus.

6. Capot de protection selon l'une des revendications 1 à 5,
**caractérisé en ce que**
les bandes de recouvrement flexibles (32) sont constituées d'un matériau plastique ou caoutchouteux pouvant être renforcé par des inserts textiles et/ou métalliques.

7. Capot de protection selon l'une des revendications 1 à 6,
**caractérisé en ce que**
une zone d'appui (28) est formée sur la face inférieure du boîtier (22) pour reposer sur le récipient de réception (12) et
au moins un dispositif de fixation (29) est prévu pour fixer le boîtier (22) sur le récipient de réception (12).

8. Capot de protection selon la revendication 7,
**caractérisé en ce que**
le dispositif de fixation (29) comprend des éléments de vissage, de serrage et/ou d'attache.

9. Ensemble de récipient comprenant un récipient de réception (12), en particulier pour recevoir des matériaux en vrac, ouvert sur sa partie supérieure (16),
**caractérisé en ce que**
un capot de protection (20) selon l'une des revendications 1 à 8 est posé sur la partie supérieure (16).

10. Ensemble de récipient selon la revendication 9,
**caractérisé en ce que**
le récipient de réception (12) est conçu sous la forme d'un conteneur ou d'une benne.

11. Ensemble de récipient selon la revendication 9 ou 10, **caractérisé en ce qu'**au moins un dispositif d'aspiration d'air est raccordé directement ou par l'intermédiaire d'une conduite d'aspiration au(x) raccord(s) d'aspiration (40).

12. Ensemble de récipient selon la revendication 11,
**caractérisé en ce que**
le dispositif d'aspiration d'air est équipé d'un système de filtration pour la séparation des polluants.

13. Procédé de remplissage d'un récipient de réception (12) ouvert sur sa partie supérieure (16) sur lequel un capot de protection (20) selon l'une des revendications 1 à 8 est posé,
**caractérisé en ce que**
une pelle excavatrice et/ou une pelle chargeuse ou similaire (5) est déplacée vers l'ouverture de chargement (26) pour y déverser des matériaux en vrac, les bandes de recouvrement flexibles (32) du rideau (30) étant poussées de leur position d'étanchéité vers une position de libération et
après le vidage, la pelle excavatrice et/ou la pelle chargeuse ou similaire (5) est retirée, ce qui permet aux bandes de recouvrement (32) de revenir à leur position d'étanchéité.
